# FASCICULE DE BREVET EUROPEEN

(11) **EP 4 499 989 B1**
(45) Date de publication et mention de la délivrance du brevet: **20.05.2026**
(21) Numéro de dépôt: 23718788.5
(22) Date de dépôt: 23.03.2023
(51) Int. Cl.: F01D 25/24, F01D 9/04, F01D 11/00

(54) **MODULE POUR TURBOMACHINE D'AÉRONEF**
MODUL FÜR FLUGZEUGTURBINENTRIEBWERK
MODULE FOR AIRCRAFT TURBINE ENGINE

(30) Priorité: 24.03.2022 FR 2202637
(43) Date de publication de la demande: 05.02.2025
(73) Titulaire: Safran Helicopter Engines, 64510 Bordes (FR)
(72) Inventeur: VOTIE, Sylvain Pierre, 77550 MOISSY-CRAMAYEL (FR); PARDO, Frédéric Philippe Jean-Jacques, 77550 MOISSY-CRAMAYEL (FR)
(74) Mandataire: Gevers & Orès
(86) Numéro de dépôt international: PCT/FR2023/050414
(87) Numéro de publication internationale: WO 2023/180668

(56) Documents cités:
- EP-A1- 1 515 004
- EP-A1- 2 218 918
- US-A- 2 997 275
- US-A1- 2004 219 014

## Description

### Domaine technique de l'invention

La présente invention concerne un module pour une turbomachine, en particulier une turbomachine d'aéronef. L'invention concerne également une turbomachine notamment d'aéronef comprenant un tel module.

### Arrière-plan technique

L'arrière-plan technique comprend notamment le document US 2004/219014 A1.

Une turbomachine d'aéronef, par exemple d'un avion ou d'un hélicoptère, comprend une entrée d'air alimentant un générateur de gaz qui comprend de l'amont vers l'aval, par référence à l'écoulement des gaz, au moins un compresseur, une chambre annulaire de combustion, et au moins une turbine pour entraîner en rotation le compresseur.

Une telle turbomachine d'aéronef s'étendant selon un axe de turbomachine permet de déplacer l'aéronef à partir du flux d'air entrant dans la turbomachine et circulant d'amont en aval. Par la suite, les termes « amont » et « aval » sont définis par rapport à l'axe de turbomachine orienté d'amont en aval. De même, les termes « intérieur » et « extérieur » sont définis selon une direction radiale définie par rapport à l'axe de la turbomachine.

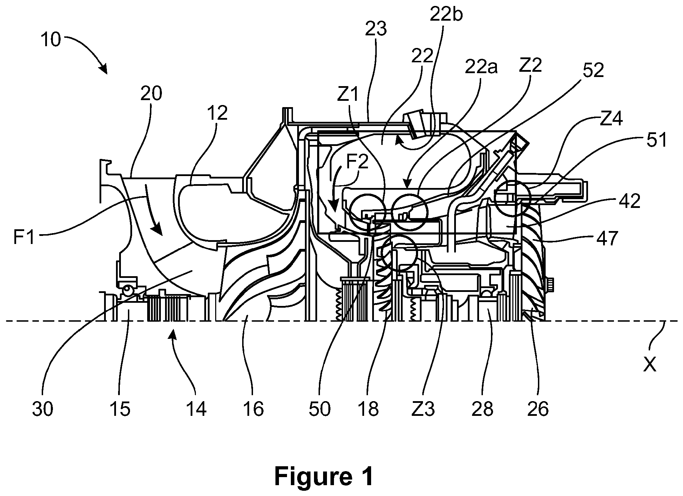

La figure 1 est une vue en demi-coupe longitudinale d'un exemple de turbomachine 10 d'axe longitudinal X. Celle-ci comporte un carter 12 dans lequel est logé un générateur de gaz 14. Ce dernier comprend un arbre de générateur de gaz 15 portant une roue de compresseur centrifuge 16 ainsi qu'une turbine haute pression 18. L'air frais F1 pénètre dans le turbomoteur via une entrée d'air 20 et s'écoule dans une veine annulaire 30. Il est ensuite comprimé par le compresseur 16 avant d'être envoyé dans une chambre de combustion 22 où il est mélangé avec du carburant. La combustion du mélange air comprimé/carburant génère un flux de gaz chaud F2 qui provoque la rotation de la turbine haute pression 18 qui elle-même entraine le compresseur 16.

En sortie de la chambre de combustion 22, le flux de gaz chaud F2 traverse au moins un distributeur ou stator 32 comprenant une roue d'aubages fixes également appelés aubes de stator 34. Ce stator a pour fonction d'orienter le flux relativement axial généré par la combustion, afin de créer un flux giratoire avant d'entrer dans la turbine haute pression 18. De telles aubes de stator 34 sont par exemple fixées sur une paroi radialement externe de la veine 30, qui correspond à une plateforme annulaire externe 36 du stator 32. Les aubes de stator 34 s'étendent longitudinalement entre la plateforme annulaire externe 36 du stator 32 et une plateforme annulaire interne 37 du stator 32 formant une paroi radialement interne de la veine 30. La turbine haute pression 18 comprend au moins un disque qui porte des aubes 38 et est mobile en rotation autour d'un axe de rotation, l'axe longitudinal X de la turbomachine.

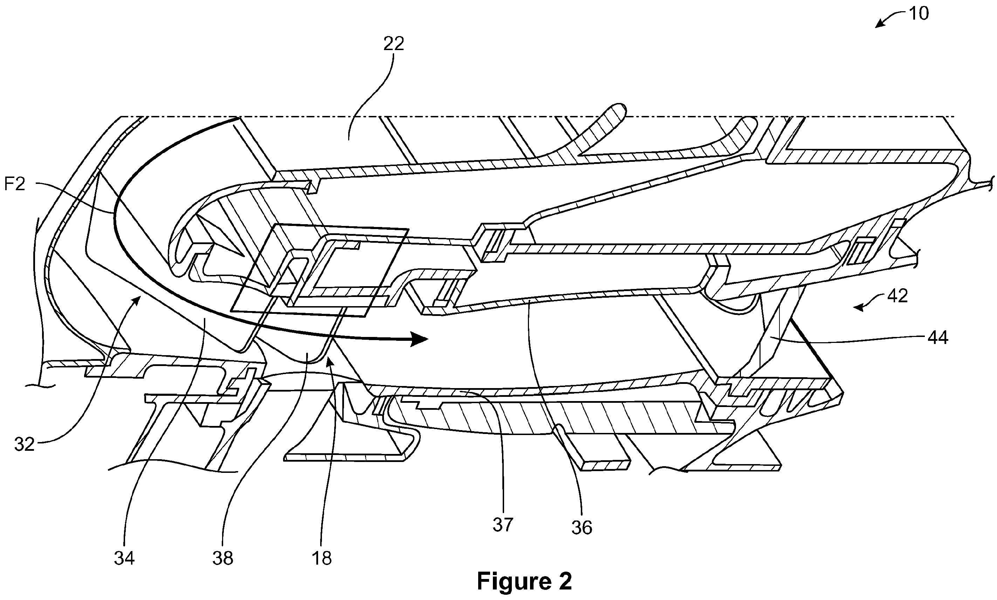

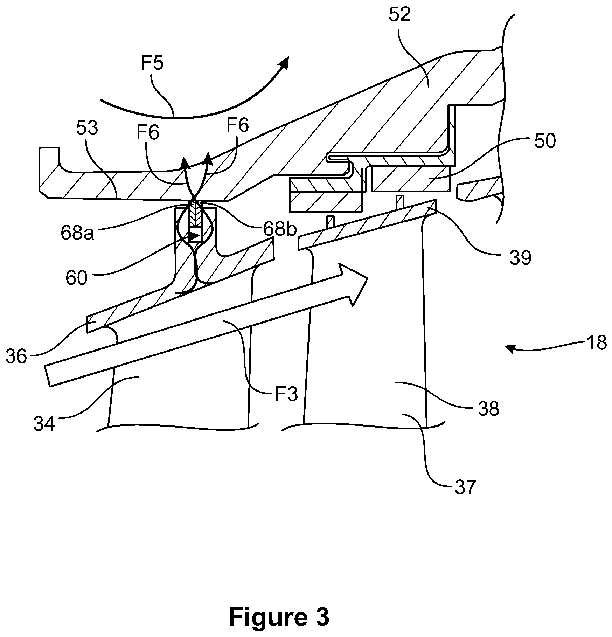

La figure 2 illustre une vue partielle tridimensionnelle et en coupe de la zone encadrée de la turbomachine de la figure 1. La figure 3 illustre de manière plus détaillée la zone encadrée de la turbomachine de la figure 2.

Par ailleurs, dans cet exemple, le turbomoteur comporte également une roue de turbine basse pression 26 fixée à un arbre de turbine 28. Comme on le voit sur la figure 1, la roue de turbine basse pression 26 est disposée en aval de la roue de turbine haute pression 18. Par conséquent, le flux de gaz brûlés sortant du générateur de gaz 14 entraine en rotation l'arbre de turbine 28. Dans ce cas, la turbomachine comporte au moins un autre distributeur ou stator 42, dit inter-turbine, puisqu'il est agencé entre la turbine haute pression 18 et la turbine basse pression 26. Ce stator inter-turbine 42 a pour fonction d'orienter le flux quasi axial en sortie de la turbine haute pression 18, afin de créer un flux giratoire avant d'entrer dans la turbine basse pression 26. Le stator inter-turbine 42 comprend de manière similaire une roue d'aubages fixes appelés aubes de stator inter-turbine 44.

De façon connue, les turbomachines comportent des systèmes d'étanchéité statiques primordiaux pour limiter les débits de fuite néfastes aux performances moteurs. Les fuites sont d'autant plus critiques que les différences de pression aux bornes des zones à étancher sont importantes.

Une des solutions existantes pour étancher les zones soumises à des différences de pression entre deux pièces statiques est un joint segment. On trouve ces joints segments dans beaucoup de zones d'une turbomachine. Les quatre zones Z1, Z2, Z3 et Z4 entourées dans la zone turbine de la turbomachine de la figure 1 illustrent des exemples de localisations de quatre joints segments. Ces étanchéités permettent d'éviter le contournement des grilles de turbine (distributeurs et pales de roue) pour éviter des pertes de rendement composant, (ces grilles sont soumises à des différences de pression entre l'entrée et la sortie de la grille).

Dans les zones chaudes de la turbomachine, les étanchéités statiques autour de la veine peuvent entrainer des échauffements de pièces adjacentes par conduction. La figure 3 illustre le flux d'air chaud circulant dans la veine, noté F3 qui se propage par conduction à travers le dispositif d'étanchéité 60 (flèches F6) jusqu'au carter interne 52 qui est refroidit par un flux d'air frais F5 circulant entre la chambre de combustion 22 et le carter interne 52. Dans de nombreux cas, ces échauffements dégradent les fonctions de ces pièces, par exemple, par augmentation des jeux entre rotor et stator entrainant une dégradation des performances du moteur, ou par échauffement de l'huile dans un palier.

Les principaux domaines qui nécessitent un refroidissement par air sont la chambre de combustion et la turbine. L'air de refroidissement est utilisé pour contrôler la température des arbres et des disques du compresseur en les refroidissant ou en les chauffant. Cela permet d'assurer une répartition uniforme de la température et donc d'améliorer le rendement du moteur en contrôlant la croissance thermique et en maintenant ainsi des jeux minimums au niveau de l'extrémité des pales et des joints.

Actuellement, seules des solutions complexes et coûteuses sont mises en place pour pallier à ces problèmes telles que des épingles, des doubles peaux ou des déflecteurs. En effet, ces solutions nécessitent d'avoir un espace disponible suffisant pour leur implantation. En général, ce sont des pièces supplémentaires coûteuses et nécessitants des solutions d'assemblage, elles-mêmes onéreuses (soudure, brasure, bride etc...) lorsque l'encombrement le permet ce qui n'est pas toujours le cas. De plus, elles apportent également une contribution en masse non négligeable.

L'invention a pour objectif de proposer une solution permettant de remédier à au moins certains de ces inconvénients.

### Résumé de l'invention

L'invention concerne un module un module de turbomachine, notamment une turbomachine d'aéronef, comprenant :
- un carter annulaire ayant une paroi interne formant paroi de veine, et
- un distributeur entouré par le carter et comportant une plateforme externe annulaire et une plateforme interne annulaire entre lesquelles s'étendent des aubes statoriques, la plateforme externe ayant une face extérieure en regard de la paroi interne du carter comportant une gorge annulaire orientée vers l'extérieure et logeant un dispositif d'étanchéité, le dispositif d'étanchéité venant au contact cylindrique d'une piste de la paroi interne du carter.

Selon l'invention, la paroi interne du carter comporte une barrière thermique en matériau céramique au droit de la piste, la piste étant agencée entre la barrière thermique et le dispositif d'étanchéité.

Ainsi, l'invention permet de remédier à au moins certains des inconvénients présentés ci-avant par une solution simple. En effet, l'invention propose d'intercaler une barrière thermique entre le dispositif d'étanchéité et la zone à protéger thermiquement. Cette barrière thermique est avantageusement en matériau céramique qui possède des caractéristiques isolantes bien plus grandes que celles des aciers.

Cette solution présente l'avantage d'être géométriquement neutre et très facilement intégrable dans les turbomachines actuelles et futures, ce qui est d'autant plus avantageux dans environnements confinés.

L'invention est ainsi facilement et avantageusement applicable pour protéger les carters et paliers que ce soit d'un point de vue thermique ou d'un point de vue usure de frottements, notamment dans un environnement géométriquement confiné.

Cette solution proposée par l'invention est simple à mettre en œuvre et facilement réparable. En effet, elle ne nécessite pas d'assemblage mécanique complexe.

Le module selon l'invention peut comprendre une ou plusieurs des caractéristiques suivantes, prises isolément ou en combinaison les unes avec les autres :
- la paroi interne du carter a une face radialement intérieure portant la piste venant au contact cylindrique du dispositif d'étanchéité et une face radialement extérieure opposée à la face intérieure et comportant une rainure annulaire au droit de la piste, la rainure ayant un fond recouvert par la barrière thermique en matériau céramique ;
- le matériau céramique de la barrière thermique a un coefficient de conduction thermique sensiblement compris entre 0,5 et 2,5 W/(m.°C), de préférence entre 1 et 2 W/(m.°C) ;
- le matériau céramique de la barrière thermique est du type zircone yttriée ;
- le matériau céramique de la barrière thermique est du type matériau composite à matrice céramique (CMC) ;
- la barrière thermique en matériau céramique présente une épaisseur comprise entre 0,5 et 1,5 mm, de préférence entre 0,8 et 1 mm ;
- le dispositif d'étanchéité comporte deux joints segment annulaires accolés l'un de l'autre et logés dans la gorge annulaire d'une face extérieure de la plateforme externe du redresseur ;
- le dispositif d'étanchéité comporte au moins un joint annulaire logé dans la gorge annulaire de la face extérieure de la plateforme externe du redresseur, le joint étant du type joint C ou joint à lamelle ou joint Omega ou un joint segment à anneau.

L'invention concerne également une turbomachine, notamment d'aéronef, comportant un module tel que décrit précédemment.

### Brève description des figures

L'invention sera mieux comprise et d'autres caractéristiques et avantages apparaîtront encore à la lecture de la description détaillée qui suit comprenant des modes de réalisation, donnés à titre illustratif en référence avec les figures annexées et présentés en tant qu'exemples non limitatifs, qui pourront servir à compléter la compréhension de la présente invention et l'exposé de sa réalisation et, le cas échéant, contribuer à sa définition, sur lesquelles :
- la figure 1, déjà décrite, est une demi-vue schématique en coupe axiale (ou longitudinale) d'une partie d'une turbomachine d'aéronef à laquelle l'invention s'applique;
- la figure 2, déjà décrite, représente une vue partielle tridimensionnelle et en coupe de la zone encadrée de la turbomachine de la figure 1 ;
- la figure 3, déjà décrite, illustre de manière plus détaillée la zone encadrée de la turbomachine de la figure 2 selon l'état de l'art ;
- la figure 4 représente la zone encadrée de la turbomachine de la figure 2 selon un mode de réalisation d'un module selon l'invention ;
- la figure 5 représente une vue en coupe dans un plan perpendiculaire à l'axe longitudinal de la turbomachine d'un dispositif d'étanchéité selon l'invention ; et
- la figure 6 représente une vue éclatée des deux joints segments d'un dispositif d'étanchéité.

Les éléments ayant les mêmes fonctions dans les différentes mises en œuvre ont les mêmes références dans les figures.

### Description détaillée de l'invention

L'invention s'applique à une turbomachine destinée à être montée sur un aéronef, tel qu'un avion ou un hélicoptère. La turbomachine peut être un turbomoteur, un turboréacteur, par exemple une turbomachine équipée d'une soufflante carénée (turbosoufflante) ou un turbopropulseur, par exemple un ensemble propulsif équipé d'une hélice non carénée (« open rotor », « USF » pour «Unducted Single Fan » ou « UDF » pour « Unducted Fan »). Bien entendu, l'invention s'applique à d'autres types de turbomachines qu'elles soient à double ou simple flux, telle que celle illustrée sur la figure 1.

La figure 1 représente une partie d'une turbomachine 10 d'aéronef telle qu'un turboréacteur d'hélicoptère. La turbomachine 10 comprend d'amont en aval, par référence au sens d'écoulement des gaz (cf. flèches), une entrée d'air 20, au moins un compresseur 16, une chambre annulaire de combustion 22, et au moins une turbine 18.

L'air qui pénètre dans le moteur par l'entrée d'air 20 est comprimé dans le compresseur 16 qui est ici un compresseur centrifuge. L'air comprimé sort radialement vers l'extérieur et alimente la chambre de combustion 22.

La chambre de combustion 22 comprend deux parois annulaires, respectivement interne 22a et externe 22b. La paroi annulaire externe 22b s'étend autour de la paroi annulaire interne 22a. Les parois annulaires interne 22a et externe 22b sont elles-mêmes agencées à l'intérieur d'un carter externe 23 de la chambre de combustion 22. Ce carter externe 23 est fixé à une extrémité amont au carter 12 du compresseur 16 et de l'entrée d'air 20.

L'air comprimé est mélangé à du carburant puis brûlé dans la chambre de combustion 22, ce qui génère des gaz de combustion qui sont ensuite injectés dans les turbines 18, 26.

Un étage de turbine haute pression 18 est situé juste en aval de la sortie de la chambre de combustion 22 et comprend un distributeur de stator 34 et une roue de rotor 37. Un étage de turbine basse pression 26 est situé en aval de l'étage 18 et comprend également un distributeur de stator 42 et une roue de rotor 47.

Un distributeur de turbine comprend une rangée annulaire d'aubes fixes 34, 44 d'orientation du flux de gaz, et une roue de turbine comprend une rangée annulaire d'aubes 38 portées par un disque de rotor 37, 47.

Le carter annulaire externe 23 comprend en outre à son extrémité aval une bride annulaire de fixation à des brides de support d'anneaux d'étanchéité 50, 51 en matériau abradable.

Un carter annulaire interne 52 s'étend à l'intérieur de la paroi 22a et porte à son extrémité amont l'anneau d'étanchéité 50 qui s'étend autour de la roue 37 de la turbine haute pression 18, et à son extrémité aval une bride de fixation à la bride annulaire aval du carter externe 23. L'anneau d'étanchéité 51 s'étend autour de la roue 47 de l'étage basse pression 26. Le carter annulaire interne 52 a une paroi interne 53 formant paroi de veine.

Chaque anneau d'étanchéité 50, 51 comprend une surface cylindrique interne qui est revêtue d'une couche annulaire abradable configurée pour s'user par frottement avec les sommets 39 des aubes 38 de la roue 37 afin de réduire au maximum les fuites de gaz dans cette zone. Cette couche abradable a avantageusement une fonction de barrière thermique.

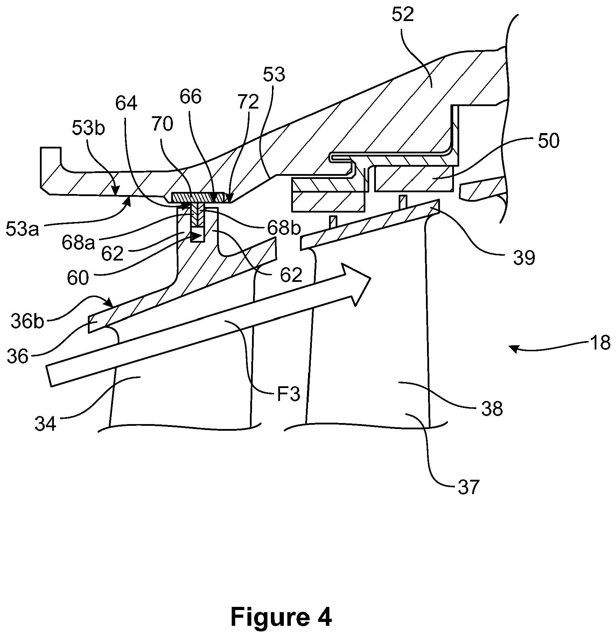

On se reporte dorénavant à la figure 4 qui est une représentation schématique d'un module de la turbomachine selon l'invention. Ce module comporte le carter annulaire interne 52 logeant le stator 34 de la turbine haute pression 18 agencé juste en aval de la sortie de la chambre de combustion et juste en amont de la roue de rotor 37.

La plateforme annulaire externe 36 du stator 34 a une face extérieure 36b, en regard de la paroi interne 53 du carter 52. La face extérieure 36b comporte une gorge annulaire 60 orientée vers l'extérieure. Dans l'exemple illustré, deux bras 62 s'étendent parallèlement l'un de l'autre dans une direction sensiblement radiale vers l'extérieur à partir de la face extérieure 36b de la plateforme annulaire externe 36 du stator 34. La gorge 60 est formée entre ces deux bras 62 se réunissant pour former un U dont le fond définit la gorge 60.

La gorge 60 loge un dispositif d'étanchéité 64 venant au contact cylindrique d'une piste 66 de la paroi interne 53 du carter 52. Le dispositif d'étanchéité 64 comporte au moins un joint segment logé dans la gorge 60 annulaire.

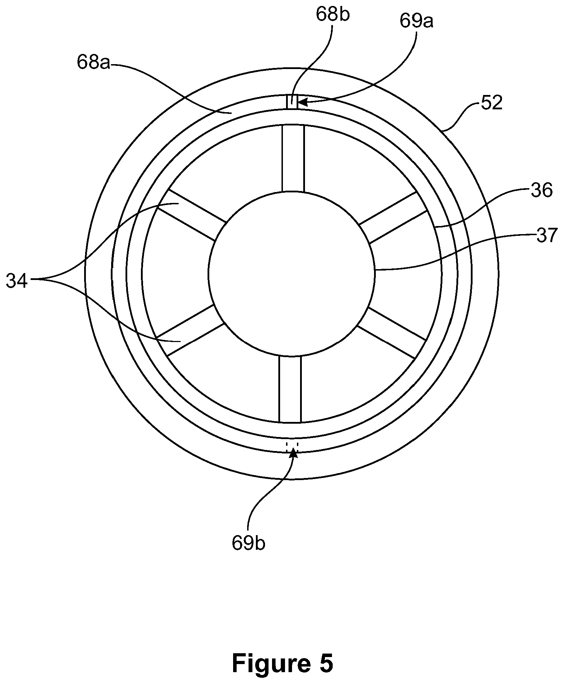

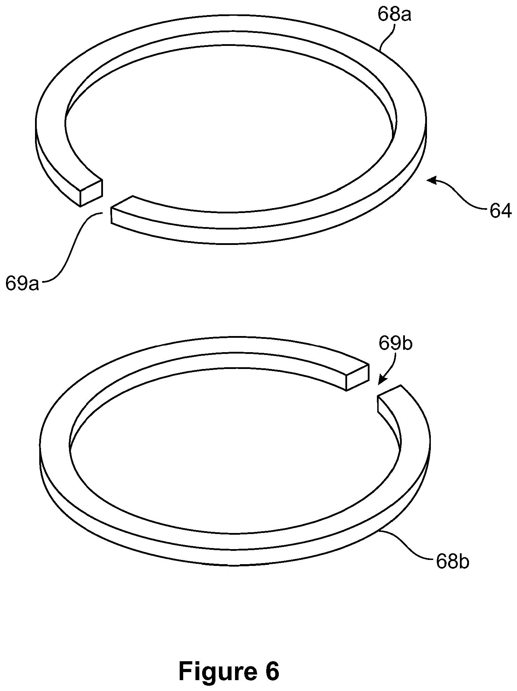

Dans l'exemple illustré sur la figure 4, le dispositif d'étanchéité 64 comporte deux joints segments 68a, 68b. Les joints segments 68a, 68b sont accolés l'un à l'autre et logés dans la gorge 60 annulaire de la face extérieure de la plateforme externe du redresseur. Chaque joint segment 68a, 68b est de forme annulaire et fendu. Les joints segments 68a, 68b sont accolés l'un à l'autre de sorte que leurs fentes 69a, 69b sont de préférence diamétralement opposées tel qu'illustré sur les figures 5 et 6. La figure 5 représente un dispositif d'étanchéité selon l'invention selon une vue en coupe dans un plan perpendiculaire à l'axe longitudinal de la turbomachine. La figure 6 représente une vue éclatée des deux joints segments 68a, 68b.

Selon l'invention, la paroi interne 53 du carter 52 comporte une barrière thermique 70 en matériau céramique en regard de la piste 66. Au sens de l'invention, une barrière thermique est un revêtement céramique ayant une faible conductivité thermique. Plus précisément, la paroi interne 53 du carter a une face radialement intérieure 53a et une face radialement extérieure 53b opposée à la face intérieure 53a. La face intérieure 53a porte la piste 66 venant au contact cylindrique du dispositif d'étanchéité 60. La face extérieure 53b comporte une rainure annulaire 72 en regard de la piste 66, la rainure 72 ayant un fond recouvert par la barrière thermique 70 en matériau céramique. Ainsi, la barrière thermique 70 est au droit de la piste 66. La piste 66 s'étend entre la barrière thermique 70 et les joints segment du dispositif d'étanchéité 64.

Avantageusement, le matériau céramique de la barrière thermique a un coefficient de conduction thermique sensiblement compris entre 0,5 et 2,5 W/(m.°C), et de préférence entre 1 et 2 W/(m.°C) par rapport à un coefficient de conduction thermique sensiblement égal à 15 W/(m.°C) pour les aciers. Préférentiellement, le matériau céramique de la barrière thermique est du type zircone yttriée (ZR02-Y203 8%). Alternativement, le matériau céramique de la barrière thermique est du type matériau composite à matrice céramique (CMC).

Cette barrière thermique 70 en céramique est projetée dans la rainure 72 pour l'encastrer puis rectifiée pour atteindre un état de surface nécessaire à l'étanchéité de la piste 66 et à la limitation de l'usure des segments 68a, 68b. Cette barrière thermique 70 en céramique est aisément réparable par projection également associée à une rectification.

La barrière thermique en matériau céramique présente une épaisseur, c'est-à-dire une dimension mesurée selon une direction radiale, comprise entre 0,5 et 1,5 mm, et de préférence entre 0,8 et 1 mm.

Une telle barrière thermique a la propriété d'être un très bon isolant tout en ayant une dureté assez importante. Le fait d'intercaler cette barrière thermique entre le dispositif d'étanchéité, notamment les joints segments dans l'exemple, et la zone à protéger de la conduction thermique, ici le carter interne 52, de la source chaude (flux d'air circulant dans la veine) permet de réaliser efficacement une isolation thermique tout en conservant les propriétés géométriques optimales du dispositif d'étanchéité initial.

Cette barrière thermique permet de couper les échanges conductifs entre le distributeur, le dispositif d'étanchéité, notamment les joints segments dans l'exemple, et le blindage. Ainsi, elle permet avantageusement de protéger thermiquement le carter interne 52 du flux d'air chaud circulant dans la veine et ainsi de conserver toutes ses capacités mécaniques de rétention.

En outre, dans l'exemple illustré, une source froide est associée à la zone à protéger. Cette source froide est formée par un flux d'air frais externe à la turbomachine venant épouser le carter. C'est-à-dire que la zone à protéger, le carter interne dans l'exemple illustré, est agencée entre le flux d'air refroidissant provenant de la source froide et le flux d'air chaud circulant dans la veine. Une telle configuration avec une source froide permet avantageusement d'obtenir une meilleure efficacité thermique. Le flux d'air frais peut provenir d'un système de circulation d'huile, par exemple pour le refroidissement des paliers de la turbomachine, ou d'un système de ventilation forcée, via des dispositifs de refroidissement par impact.

Dans l'exemple illustré en figures 4 à 6, le dispositif d'étanchéité comporte deux joints segment annulaires accolés l'un de l'autre. Selon d'autres variantes, le dispositif d'étanchéité comporte au moins un joint annulaire logé dans la gorge annulaire de la face extérieure de la plateforme externe du redresseur, le joint étant du type joint C ou joint à lamelle ou joint Omega ou un joint à anneau.

La barrière thermique de l'invention telle qu'elle a été décrite permet ainsi avantageusement de protéger notamment les carters et paliers à la fois thermiquement et de l'usure de frottements, notamment dans un environnement géométriquement confiné.

Une telle solution est simple à mettre en œuvre puisqu'elle ne nécessite pas d'assemblage mécanique complexe et réparable.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de l'invention tel que défini dans les revendications annexées.

## Revendications

1. Module de turbomachine, notamment une turbomachine (10) d'aéronef, comprenant :
- un carter annulaire (52) ayant une paroi interne (53) formant paroi de veine, et
- un distributeur (32) entouré par le carter et comportant une plateforme externe (36) annulaire et une plateforme interne (37) annulaire entre lesquelles s'étendent des aubes statoriques (34), la plateforme externe ayant une face extérieure (36b) en regard de la paroi interne du carter comportant une gorge (60) annulaire orientée vers l'extérieure et logeant un dispositif d'étanchéité (64), le dispositif d'étanchéité venant au contact cylindrique d'une piste (66) de la paroi interne (53) du carter,
le module étant **caractérisé en ce que** la paroi interne (53) du carter comporte une barrière thermique (70) en matériau céramique au droit de la piste (66), la piste étant agencée entre la barrière thermique et le dispositif d'étanchéité.

2. Module selon la revendication 1, dans lequel la paroi interne (53) du carter a une face radialement intérieure (53a) portant la piste (66) venant au contact cylindrique du dispositif d'étanchéité et une face radialement extérieure (53b) opposée à la face intérieure (53a) et comportant une rainure (72) annulaire au droit de la piste (66), la rainure (72) ayant un fond recouvert par la barrière thermique (70) en matériau céramique.

3. Module selon la revendication 1 ou 2, dans lequel le matériau céramique de la barrière thermique (70) a un coefficient de conduction thermique sensiblement compris entre 0,5 et 2,5 W/(m.°C), de préférence entre 1 et 2 W/(m.°C).

4. Module selon l'une quelconque des revendications 1 à 3, dans lequel le matériau céramique de la barrière thermique (70) est du type zircone yttriée.

5. Module selon l'une quelconque des revendications 1 à 3, dans lequel le matériau céramique de la barrière thermique (70) est du type matériau composite à matrice céramique (CMC).

6. Module selon l'une quelconque des revendications précédentes, dans lequel la barrière thermique (70) en matériau céramique présente une épaisseur comprise entre 0,5 et 1,5 mm, de préférence entre 0,8 et 1 mm.

7. Module selon l'une quelconque des revendications précédentes, dans lequel le dispositif d'étanchéité (64) comporte deux joints segment (68a, 68b) annulaires accolés l'un de l'autre et logés dans la gorge (60) annulaire d'une face extérieure (36b) de la plateforme externe (36) du redresseur.

8. Module selon l'une quelconque des revendications précédentes 1 à 6, dans lequel le dispositif d'étanchéité (64) comporte au moins un joint annulaire logé dans la gorge annulaire de la face extérieure de la plateforme externe du redresseur, le joint étant du type joint C ou joint à lamelle ou joint Omega ou un joint segment à anneau.

9. Turbomachine (10) d'aéronef comprenant un module selon l'une quelconque des revendications précédentes.

## Patentansprüche

1. Modul für ein Turbotriebwerk, insbesondere ein Turbotriebwerk (10) eines Luftfahrzeugs, umfassend:
- ein ringförmiges Gehäuse (52), das eine Innenwand (53) aufweist, die eine Kanalwand bildet, und
- einen Verteiler (32), der von dem Gehäuse umgeben ist und eine ringförmige äußere Plattform (36) und eine ringförmige innere Plattform (37) umfasst, zwischen denen sich Statorschaufeln (34) erstrecken, wobei die äußere Plattform eine der Innenwand des Gehäuses zugewandte Außenseite (36b) aufweist, die eine ringförmige Nut (60) umfasst, die nach außen gerichtet ist und eine Dichtungsvorrichtung (64) beherbergt, wobei die Dichtungsvorrichtung mit einer Bahn (66) der Innenwand (53) des Gehäuses in zylindrischem Kontakt gelangt,
wobei das Modul **dadurch gekennzeichnet ist, dass** die Innenwand (53) des Gehäuses eine Wärmesperre (70) aus Keramikmaterial im Bereich der Bahn (66) umfasst, wobei die Bahn zwischen der Wärmesperre und der Dichtungsvorrichtung angeordnet ist.

2. Modul nach Anspruch 1, wobei die Innenwand (53) des Gehäuses eine radial innere Seite (53a), die die Bahn (66) trägt, welche mit der Dichtungsvorrichtung in zylindrischen Kontakt gelangt, und eine radial äußere Seite (53b) aufweist, die der inneren Seite (53a) gegenüberliegt und eine ringförmige Nut (72) im Bereich der Bahn (66) umfasst, wobei die Nut (72) einen Boden aufweist, der von der Wärmesperre (70) aus Keramikmaterial bedeckt ist.

3. Modul nach Anspruch 1 oder 2, wobei das Keramikmaterial der Wärmesperre (70) einen Wärmeleitkoeffizienten von im Wesentlichen zwischen 0,5 und 2,5 W/(m.°C), vorzugsweise zwischen 1 und 2 W/(m.°C), aufweist.

4. Modul nach einem der Ansprüche 1 bis 3, wobei das Keramikmaterial der Wärmesperre (70) vom Typ yttriumstabilisiertes Zirkonoxid ist.

5. Modul nach einem der Ansprüche 1 bis 3, wobei das Keramikmaterial der Wärmesperre (70) vom Typ Keramikmatrix-Verbundwerkstoff (CMC) ist.

6. Modul nach einem der vorstehenden Ansprüche, wobei die Wärmesperre (70) aus Keramikmaterial eine Dicke zwischen 0,5 und 1,5 mm, vorzugsweise zwischen 0,8 und 1 mm, aufweist.

7. Modul nach einem der vorstehenden Ansprüche, wobei die Dichtungsvorrichtung (64) zwei ringförmige Segmentdichtungen (68a, 68b) umfasst, die aneinander anliegen und in der ringförmigen Nut (60) einer Außenseite (36b) der äußeren Plattform (36) des Gleichrichters untergebracht sind.

8. Modul nach einem der vorstehenden Ansprüche 1 bis 6, wobei die Dichtungsvorrichtung (64) mindestens eine ringförmige Dichtung umfasst, die in der ringförmigen Nut der Außenseite der äußeren Plattform des Gleichrichters untergebracht ist, wobei die Dichtung vom Typ C-Dichtung oder Lamellendichtung oder Omega-Dichtung oder eine Ringsegmentdichtung ist.

9. Turbotriebwerk (10) eines Luftfahrzeugs, das ein Modul nach einem der vorstehenden Ansprüche umfasst.

## Claims

1. A turbine engine module, in particular an aircraft turbine engine (10), comprising:
- an annular casing (52) having an internal wall (53) forming a channel wall, and
- a bladed stator (32) surrounded by the casing and comprising an annular external platform (36) and an annular internal platform (37) between which stator blades (34) extend, the external platform having an outer face (36b) facing the internal wall of the casing comprising an annular slot (60) facing outwards and housing a sealing device (64), the sealing device coming into cylindrical contact with a track (66) on the inner wall (53) of the casing,
the module being **characterised in that** the internal wall (53) of the casing comprises a thermal barrier (70) made of ceramic material directly above the track (66), the track being arranged between the thermal barrier and the sealing device.

2. The module according to claim 1, wherein the internal wall (53) of the casing has a radially inner face (53a) carrying the track (66) coming into cylindrical contact with the sealing device and a radially outer face (53b) opposite the inner face (53a) and comprising an annular groove (72) directly above the track (66), the groove (72) having a bottom covered by the thermal barrier (70) made of ceramic material.

3. The module according to claim 1 or 2, wherein the ceramic material of the thermal barrier (70) has a thermal conduction coefficient substantially between 0.5 and 2.5 W/(m.°C), preferably between 1 and 2 W/(m.°C).

4. The module according to any one of claims 1 to 3, wherein the ceramic material of the thermal barrier (70) is of the yttria-stabilized zirconia type.

5. The module according to any one of claims 1 to 3, wherein the ceramic material of the thermal barrier (70) is of the ceramic matrix composite (CMC) type.

6. The module according to any one of the preceding claims, wherein the thermal barrier (70) made of ceramic material has a thickness of between 0.5 and 1.5 mm, preferably between 0.8 and 1 mm.

7. The module according to any one of the preceding claims, wherein the sealing device (64) comprises two annular segment seals (68a, 68b) adjoining one another and housed in the annular slot (60) of an outer face (36b) of the external platform (36) of the rectifier.

8. The module according to any one of the preceding claims 1 to 6, wherein the sealing device (64) comprises at least one annular seal housed in the annular slot of the outer face of the external platform of the rectifier, the seal being of the C-seal or Lamella seal or Omega seal type or a segmental ring seal.

9. An aircraft turbine engine (10) comprising a module according to any one of the preceding claims.
